# EUROPÄISCHE PATENTSCHRIFT

(11) **EP 0 904 985 B1**
(45) Veröffentlichungstag und Bekanntmachung des Hinweises auf die Patenterteilung: **17.07.2002**
(21) Anmeldenummer: 98114848.9
(22) Anmeldetag: 07.08.1998
(51) Int. Cl.: B60R 11/02, H04R 5/02, H04R 1/28

(54) **Anordnung eines Tiefton-Lautsprechers unter einem Fahrzeugsitz**
Woofer arrangement under a vehicle seat
Agencement d'un haut-parleur basses fréquences sous un siège de véhicule

(30) Priorität: 13.08.1997 DE 19735082
(43) Veröffentlichungstag der Anmeldung: 31.03.1999
(73) Patentinhaber: Bayerische Motoren Werke Aktiengesellschaft, 80788 München (DE)
(72) Erfinder: Edgar, Kirk, 85591 Vaterstetten (DE)

(56) Entgegenhaltungen:
- DE-A- 4 137 304
- FR-A- 2 391 881
- US-A- 5 193 118
- US-A- 5 218 175
- PATENT ABSTRACTS OF JAPAN vol. 016, no. 574 (E-1298), 14. Dezember 1992 & JP 04 223697 A (MATSUSHITA ELECTRIC IND CO LTD), 13. August 1992
- PATENT ABSTRACTS OF JAPAN vol. 015, no. 343 (E-1106), 30. August 1991 & JP 03 132295 A (MATSUSHITA ELECTRIC IND CO LTD), 5. Juni 1991
- PATENT ABSTRACTS OF JAPAN vol. 012, no. 379 (E-667), 11. Oktober 1988 & JP 63 125093 A (MATSUSHITA ELECTRIC IND CO LTD), 28. Mai 1988

## Beschreibung

Die Erfindung bezieht sich auf eine Anordnung eines Tiefton-Lautsprechers unter einem Fahrzeugsitz.

Eine derartige Anordnung ist aus PATENT ABSTRACTS OF JAPAN, vol.016, no.574 (E-1298), 14. Dezember 1992 und der JP 04 223697 A bekannt. Dabei erfolgt eine Schallabstrahlung des Lautsprechers in den Fahrzeuginnenraum über ein Schallrohr, das durch den Längsträger des Fahrzeugs gebildet ist. Das Schallrohr endet etwa unter dem Armaturenbrett.

Es ist ferner eine derartige Anordnung aus der US 5,193,118 bekannt. Dabei ist der Lautsprecher gemeinsam mit einem Fahrzeug-Vordersitz befestigt. Das Resonanzvolumen ist auf der Rückseite durch den Fahrzeugboden begrenzt. Zwar ist dabei auch vorgesehen, den Fahrzeugboden zur Vergrößerung des Resonanzvolumens abzusenken. Für einen wirksamen Tiefton-Lautsprecher, insbesondere einen Subwoofer ist das Resonanzvolumen dabei jedoch nicht ausreichend. Hinzu kommt das Problem der Interferenz. Da sowohl der Lautsprecher als auch das Resonanzvolumen eine in den Fahrzeuginnenraum gerichtete Schallaustrittsöffnung besitzen, kommt es zu einer Schallauslöschung aufgrund von Interferenz. Dadurch ist die Wirksamkeit eines derartigen Lautsprechers weiter erheblich beeinträchtigt.

Der Erfindung liegt die Aufgabe zugrunde, eine Anordnung der eingangs genannten Art zu schaffen, bei der auf konstruktiv einfache Weise eine wirksame Anordnung eines Tiefton-Lautsprechers unter einem Fahrzeugsitz erreicht ist.

Die Erfindung löst diese Aufgabe durch die Merkmale des Patentanspruchs 1.

Die bei der Erfindung vorgesehene akustische Verbindung zwischen dem Schwellervolumen und dem Rückraum des Lautsprechers in Form der Durchtrittsöffnung gestaltet sich akustisch günstig. Dadurch wird es möglich, die Tieftonwiedergabe zu optimieren. Gleichzeitig bleibt die Festigkeit des Tragrahmens erhalten.

Bei der Erfindung erfolgt die Schallabstrahlung des Lautsprechers in den Fahrzeuginnenraum über die Schallaustrittsfläche des Lautsprechers. Die Schallaustrittsöffnung befindet sich unmittelbar hinter der Lautsprecher-Membran und ist in den Fahrzeuginnenraum gerichtet. Der Schallaustrittsort ist hierbei identisch mit dem Lautsprechereinbauort. Das Schwellervolumen verstärkt lediglich die Wirkung des Lautsprechers. Es wirkt als Resonanzvolumen und hilft mit, um unter dem Fahrzeugsitz in einem eigentlich zu kleinen Gehäuse einen Tiefton-Lautsprecher betreiben zu können.

Im Gegensatz dazu ist bei den eingangs genannten JP-Dokumenten ein Schallrohr (24) für die Schallleitung vorgesehen, das durch den Längsträger des Fahrzeugs gebildet ist. Das Schallrohr endet etwa unter dem Armaturenbrett. Sein Ende dient als Schallaustrittsfläche.

Im Gegensatz auch zur US 5,193,118 ist nunmehr das Resonanzvolumen auch nicht mehr mit dem Fahrzeuginnenraum akustisch verbunden. Dadurch fallen Interferenzerscheinungen völlig weg. Zudem ist das wirksame Volumen lediglich durch das Volumen des Tragrahmens begrenzt. Dieser kann beispielsweise auch im Hinblick auf die wirksame Schallwiedergabe so gestaltet sein, dass das Resonanzvolumen ausreichend ist. Es ist dann ohne zusätzliche akustische Maßnahmen möglich, einen Tiefton-Lautsprecher akustisch wirksam anzuordnen.

Eine Verbesserung der Erfindung besteht darin, das Schwellervolumen über Diffusionsöffnungen mit der Umgebung zu verbinden. Dadurch ist das Resonanzvolumen gebildet durch den Rückraum des Lautsprechers, das Schwellervolumen sowie das sich daran anschließende Umgebungsvolumen. Da dieses i. d. R. nicht begrenzt ist, kann somit das Resonanzvolumen beliebig groß sein und eine optimale akustische Wirkung des Tiefton-Lautsprechers auch bei tiefen Frequenzen erreicht werden. Gleichzeitig kann durch die Abstimmungen der Diffusionsöffnungen i. d. R. ein ausreichender Schutz des Lautsprechers und sein Rückraums vor eindringender Feuchtigkeit erreicht werden.

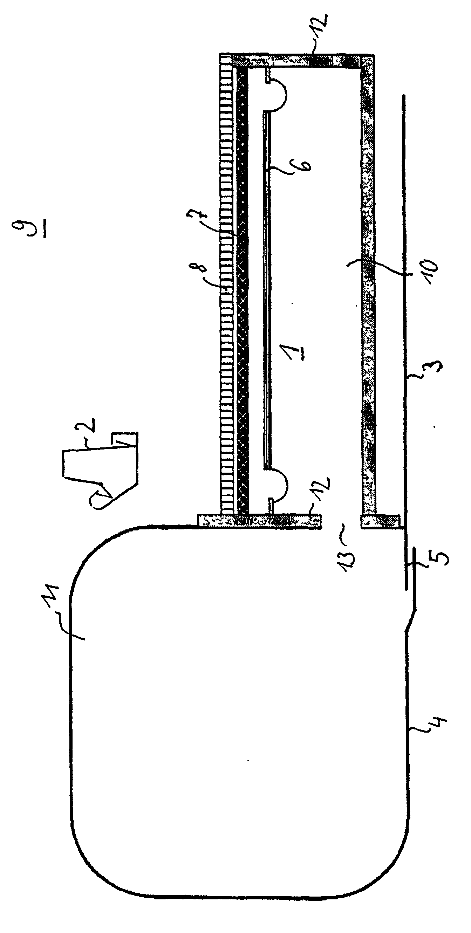

Weiter mit der bisherigen Beschreibung, S. 2, Z. 19. "Anhand der Zeichnung..."

(im Folgenden Schwellervolumen genannt), das durch den Tragrahmen 4 begrenzt ist sowie ferner durch das über die Öffnung 5 akustisch verbundene Außenvolumen der Umgebung. Da insbesondere das Außenvolumen unbegrenzt ist, kann damit der Lautsprecher mit einem nicht begrenzten Resonanzvolumen arbeiten. Gleichzeitig erfolgt nur über die Schallaustrittsöffnung 8 eine Schallabstrahlung in den Innenraum 9 des Fahrzeugs, da zusätzlich zwischen dem Lautsprecher 1 und dem Tragrahmen 4 eine hochfrequente Schallisolierung 12 vorgesehen ist. Dadurch wird eine akustische Ankopplung des Tragrahmens 4 an den Lautsprecher 1, d. h. eine Erregung des Tragrahmens 4 durch den Antrieb unterbunden.

Zwischen dem Rückraum 10 und dem Schwellervolumen 11 befindet sich eine Durchtrittsöffnung 13, die einerseits ausreichend groß bemessen ist, um einen ungehinderten Schalldurchtritt in das Schwellervolumen 11 zu gewährleisten und andererseits hinreichend klein bemessen ist, um die mechanische Stabilität des Tragrahmens 4 nicht zu beeinträchtigen.

Da über die Öffnungen 5 beispielsweise bei einer Wasserdurchfahrt Feuchtigkeit in das Schwellervolumen 11 und damit in den Rückraum 10 gelangen kann, ist der Antrieb des Lautsprechers und die Membran 6 wasserdicht ausgeführt (nicht dargestellt).

Die Anordnung des Lautsprechers 1 kann, wie an sich bekannt, unter den Vordersitzen vorgenommen werden. Es ist aber auch möglich, hierfür den Rücksitz zu verwenden. In jedem Fall ist die akustische Wirkung des Lautsprechers optimal, da das Resonanzvolumen praktisch unbegrenzt ist und eine Schallabstrahlung nur über die Membran 6 zum Innenraum hin erfolgt, während der Rückraum 10 und das Schwellervolumen 11 lediglich zur Umgebung hin Schall abstrahlen. Dadurch werden Interferenzerscheinungen vermieden. Da die Öffnung 5 klein bemessen ist, wird eine Einkopplung hochfrequenter Außengeräusche in die Volumina 10 und 11 weitgehend unterdrückt.

## Patentansprüche

1. Anordnung eines Tieftonlautsprechers unter einem Fahrzeugsitz, **dadurch gekennzeichnet, dass** das Resonanzvolumen des Lautsprechers (1) zumindest teilweise gebildet ist durch das von einem Tragrahmen (4) umschlossene Schwellervolumen (11), das mit einem hinter einer Membrane (6) des Lautsprechers gelegenen Rückraum (10) über eine Durchtrittsöffnung (13) in Verbindung steht.

2. Anordnung nach Anspruch 1, **dadurch gekennzeichnet, dass** das Schwellervolumen (11) über Diffusionsöffnungen (5) mit der Umgebung in Verbindung steht.

## Claims

1. An arrangement of a woofer beneath a vehicle seat, **characterised in that** the resonance volume of the loudspeaker (1) is formed at least in part by the sill volume (11) enclosed in a frame member (4) which is in connection with the rear space (10) behind the membrane (6) of the loudspeaker via a through opening (13).

2. An arrangement in accordance with Claim 1, **characterised in that** the sill volume (11) is in connection with the surroundings via diffusion openings (5).

## Revendications

1. Montage d'un haut-parleur de basses sous un siège de véhicule,
**caractérisé en ce que**
le volume résonnant du haut-parleur (1) est au moins formé partiellement par le volume amplificateur (11) entouré par un cadre de support (4), ce volume communiquant par un orifice de passage (13) avec le volume arrière (10) situé derrière la membrane (6) du haut-parleur.

2. Montage selon la revendication 1,
**caractérisé en ce que**
le volume amplificateur (11) communique par des orifices de diffusion (5) avec l'environnement.
